# EUROPEAN PATENT APPLICATION

(11) **EP 1 223 742 A1**
(43) Date of publication of application: **17.07.2002**
(21) Application number: 00955073.2
(22) Date of filing: 28.08.2000
(51) Int. Cl.: H04N 1/387, G06F 12/14, G06F 15/00, G06T 1/00

(54) **IMAGE DISTRIBUTING METHOD AND SYSTEM, IMAGE DATA, AND RECORDED MEDIUM**

(30) Priority: 27.08.1999 JP 28329599
(71) Applicant: Celartem Technology, Inc., Kyoto-shi, Kyoto 603-8047 (JP)
(72) Inventor: SHINDO, Jiro, c/o Celartem Technology Inc., Kyoto-shi, Kyoto 603-8047 (JP)
(74) Representative: Gibson, Stewart Harry
(86) International application number: JP0005802
(87) International publication number: WO0117228

(57) **Abstract**

An image distribution system is configured with multiple clients 2 connectable via a network environment, such as Internet 1; image file server 3 having image file database 5 containing image files and log file 6; user database 7; and security control server 4 having image key database 8 and log file 9. Image data from the image file server can be opened once the client who made the image data request gains access to the security control server using an IP address obtained from the image file server, is granted authorization, and obtains an image key. The client encodes security data, such as the date and time of the distribution of the image data, user ID, serial number of hard disk drive, and client's IP address, in order to embed it in the image data unarchived into its memory in the form of an electronic watermark and transmits the security data to the security control server in order to store it in the log file at the same time.

## Description

### Technological field

The present invention pertains to technology for network distribution of a digitized image; particularly, to an image data distribution method and a system therefore as well as image data to be utilized therein.

### Background of the technology

In general, since digital image data distributed via a network, such as the Internet, can be easily duplicated without impairing the picture quality, such data should be protected against illegal use; for example, against redistribution and/or duplication by unauthorized individuals. Thus, Japanese Kokai Patent Application No. Hei 9[1997]-191394, for example, discloses a method referred to as an electronic watermark or digital watermarking, which has been developed in order to embed copyright and source information in the image data to be distributed.

However, this type of electronic watermarking, which merely adds the copyright source, has the problem that even when illegal use occurs, the distribution route of the data, that is, when, to which clients, and under what conditions was the data distributed, could not be specified. Thus, for example, Japanese Kokai Patent Application No. 2000-50047 discloses a data distribution method in which information for designating the distribution destination is embedded in the image data. However, even with this data distribution method, because no information on which user is responsible is contained, the redistribution route of data is unlikely to be specified accurately.

Thus, the purpose of the present invention is to present an image data distribution method and a system therefor with which actual use of distributed image data by users can be found accurately, the redistribution route of the data can be specified easily in the event of an illegal use, and illegal use of the image data can be prevented or effectively curtailed.

### Disclosure of the invention

The present invention concerns an image data distribution method characterized in that it contains a step in which image data distributed from the server side is unarchived to a memory on the client side, and user security data is then added to the unarchived image data in order to prevent illegal use of image data resulting from the distribution of image data from the server side to the client side via a network:

Accordingly, security data, that is, user or client identification data for the prevention of illegal use, can be added to the image data by the client who received the distributed image data, so that if the image data is used illegally, its redistribution route can be easily traced. Thus, an effective psychological restraint against the illegal use of image data can be achieved.

In a particular application example, a process in which the user security data is transmitted from the client side to the server side and a step in which said security data is stored in a storage device on the server side are included wherein security data added to given image data and the security data stored on the server side can be cross-referenced in the event of illegal use of the image, so that the redistribution route of the image data can be more accurately traced.

Preferably, the security data may be added to image data in the form of an electronic watermark.

More preferably, the security data can be added to the image data by selecting several pixels at non-adjacent positions locations among the pixels for the aforementioned image data unarchived to a memory and by increasing or decreasing the luminance level of the aforementioned pixels selected.

In addition, the present invention concerns an image data distribution method characterized in that it includes a step in which an instruction is given so that the aforementioned client can gain access to a security controller which performs authorization for image data distribution in response to a request made by the client, and a step in which an electronic key for unarchiving the image data is transmitted from the aforementioned security controller to the aforementioned client side in response to the authorization request for image data distribution from the aforementioned client side on the aforementioned server side in order to prevent illegal use of image data resulting from the distribution of image data from the server side to client side via a network.

When distribution destinations are verified in advance in this manner, the image data can be prevented from being distributed to unauthorized users or clients.

In a particular application example, a step for storing the communication status on the client side is provided. Accordingly, said distribution destination can be easily identified on the server side after the distribution of image data, so that in the event of illegal use, its redistribution route can be easily traced.

In another application example, it is desirable that a security controller be provided separately from the server used for image data distribution, and the client side is instructed to gain access to the security controller using a IP address given to it.

In another application example of the present invention, a storage medium containing software for the execution of said image data distribution method is presented on the client side or the server side.

In yet another application example of the present invention, the image data distribution method is characterized as a method for distributing image data from a server to clients and comprises a step in which an instruction for the aforementioned client side to gain access to a security controller is given from the server side in response to a request for image data by the client, a step in which the aforementioned client gains access to the aforementioned security controller in order to be authorized for image data distribution, a step in which image data corresponding to the aforementioned request is transmitted from the aforementioned server side to the aforementioned client side, a step in which an image key for opening the aforementioned image data is transmitted from the aforementioned server side to the aforementioned client side, a step in which the aforementioned image data is unarchived using the aforementioned image key on the aforementioned client side, and user security data is added to said image data, and a step in which the image data to which the aforementioned security data has been added is output.

When so configured, because distribution destinations can be verified in advance in order to prevent image data from being distributed to unauthorized users or clients, and a client who actually received the image data can add security data, that is, user or client identification data for the prevention of illegal use, to the image data, the redistribution route in the event of illegal use of the image data can be easily traced. Therefore, not only can the illegal use of image data be effectively prevented, but also there results a strong psychological restraint against the illegal use of image data.

In a particular application example, because a step in which the aforementioned security data is transmitted to the server side and a step in which said security data is stored by the server are further provided, in the case of illegal use of image data, the security data that has been added to the image data and the security data stored by the server can be cross-referenced in order to trace and specify the redistribution route of the image data more accurately.

In another application example, because the server is further provided with a step in which communication status with the client is stored in a log file, a client or user culpable of illegal use can be specified more accurately and easily.

In addition, in a particular application example, it is desirable that a security controller be provided separately from the server used for image data distribution, and access to the security controller is instructed by giving an IP address to the client side.

In another application example, image data transmitted from the server side is compressed, so that the security data can be added after said image data is unarchived on the client side.

In addition, it is desirable that the security data be added to the image data in the form of an electronic watermark.

In a specific application example, the security data can be added to the image data by selecting several pixels at non-adjacent positions locations among the pixels for the image data unarchived using the aforementioned image key and by increasing or decreasing the luminance level of the aforementioned selected pixels.

The date and time of the distribution of the image data, user ID, and the serial number of the client storage device storing the image data or the IP address of the client may be included in the security data. When they are utilized, the redistribution route after the distribution of the image data can be easily traced.

The present invention also provides an image data distribution system that is characterized in that it is equipped with an image file server having an image file database containing image files, a security control server having a user database containing registration data on respective users and an image key database containing image keys for unarchiving respective image files to clients, and a network for connecting the image file server, the security control server, and the clients; wherein,
the image file server has a function of instructing a client to gain access to the security control server in response to a request from said client for image data and a function of transmitting the image data requested to the client,
the client has a function of gaining access to the security control server to request for user authorization in order to obtain the image data,
the security control server has functions of verifying via the user database, the user in response to the client's request for authorization and of then transmitting the image key to the requested image data from the image key database, and
the client is further provided with functions for unarchiving the image data received using the image key and for adding user security data to said image data.

When so configured, distribution destinations can be authorized in advance in order to prevent image data from being distributed to unauthorized users or clients, and the redistribution route of image data can be specified easily, since security data, that is, user or client identification data, is added to the image data by the client who received the image data, so that an image data distribution method with which illegal use of image data can be prevented and psychologically discouraged more reliably than ever can be realized.

In a particular application example, because the client has also the function of transmitting the security data to the security control server, and the security control server also has the function of storing the security data, the security data in the image data and the one stored in the security control server can be cross-referenced at a later time.

In another application example, because the security control server has a log file to store the communication status with a client, the image data distribution status can be ascertained more accurately.

It is desirable that the image file server give the instruction for gaining access to the security control server through the provision of the IP address.

In a particular application example, image data transmitted from the image file server is compressed, so that the client unarchives the image data received before adding the security data.

It is desirable that the client add the security data to the image data in the form of an electronic watermark.

In addition, it is convenient if the security data contain the date and time of the distribution of the image data, user ID, and the serial number of the client's storage device storing the image data or the IP address of the client when specifying the redistribution route of the image data.

Furthermore, the present invention also provides image data with embedded user information by increasing or decreasing the luminance levels of several selected pixels placed at discrete locations on a map of pixel data represented by dots.

### Brief description of the figures

Figure 1 is a diagram showing the outlined configuration of a preferred application example of the image data distribution system in accordance with the present invention.
Figure 2 is a flowchart showing the process of image data distribution in the image data distribution system in Figure 1.

### Preferred embodiment of the invention

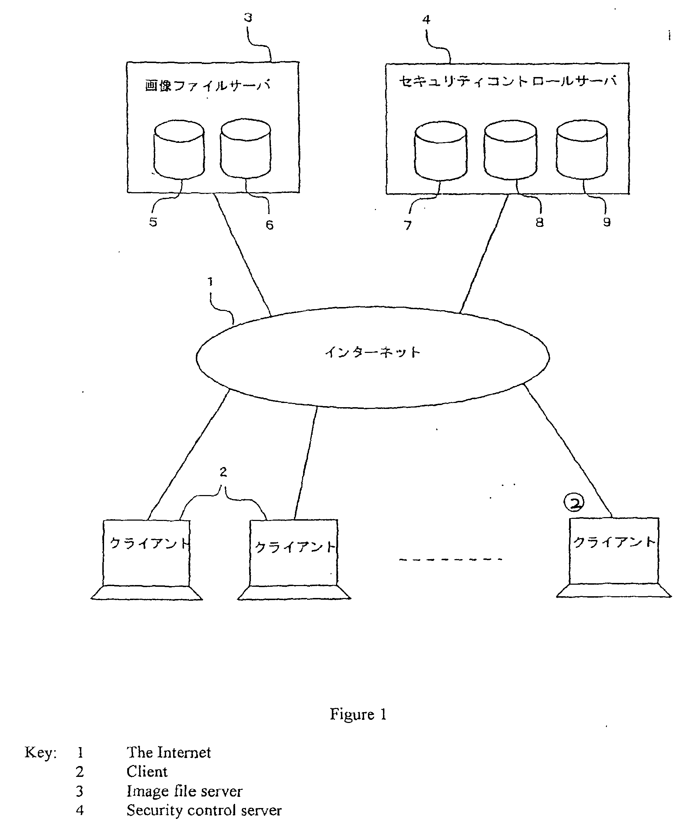

Figure 1 shows the outline of a system configuration on the Internet as a preferred application example of the image distribution system in accordance with the present invention. The image distribution system in the present application example is configured with multiple clients (2) connectable via a network environment, such as the Internet (1), an image filer server (3), and a security control server (4). The client (2) is a computer provided with functions for transmitting a request specifying a desired image to the image file server (3) using WWW browser on the Internet (1) in order to receive digital image data from said server and for regenerating the image.

The image file server (3) is made of a computer for transmitting image data in response to the request from the client (2) on the Internet and provided with a file database (5) containing image files and a log file (6) for storing communication status with the client (2). Furthermore, the image file server (3) has the function of transmitting an IP address for the security control server (4) in response to the request for image data from the client (2) in order to instruct the client (2) to gain access to the security control server and the function of transmitting the requested image data from the image file database (5) to the client.

In the present application example, compressed hierarchized image files having a data structure in which digitized image data is hierarchized once according to the significance of the information (for example, luminance level or changes in luminance level) the respective pixels have and then restructured are stored in the image file database (5). These hierarchized image files can be generated using, for example, the image compression method described in the specifications of International Patent Application No. PCT/JP00/04472 by the inventor of the present application. Said hierarchized image files comprise information on the positions and the luminance levels of respective pixels. Because the images differ in terms of quality, that is, resolution, depending on their ranking and size, the client can specify the image quality when requesting image data.

The security control server (4) has a user database (7) containing the contents of the registrations of users who are allowed to utilize the image files in the image file database (5), an image key database (8) containing the necessary image keys for unarchiving the aforementioned image files, and a log file (9) for storing communication statuses with clients (2). Respective users and their identification data are classified into several groups and registered in the user database (7) of the present application example. Each group is granted certain rights, so that they select the corresponding quality, that is, resolution, and size.

The client (2) can gain access to the security control server using the IP address for the security control server (4) received from the image file server (3) in order to request for authorization to acquire the image data. The security control server (4) verifies the user through database (7) in response to said authorization request and transmits an image key peculiar to the image data requested from the image key database (8).

The client (2) is also able to unarchive the image data received from the image file server (3) into the memory using the aforementioned image key and to add user security data to said image data. Said security data contains identification data on the client or user, such as the date and time of the distribution of the image data, user ID, serial number of the storage device, for example, a hard disk drive, to which the image data was downloaded, IP address of the client (2), which are useful for tracing the redistribution route in the event of illegal use.

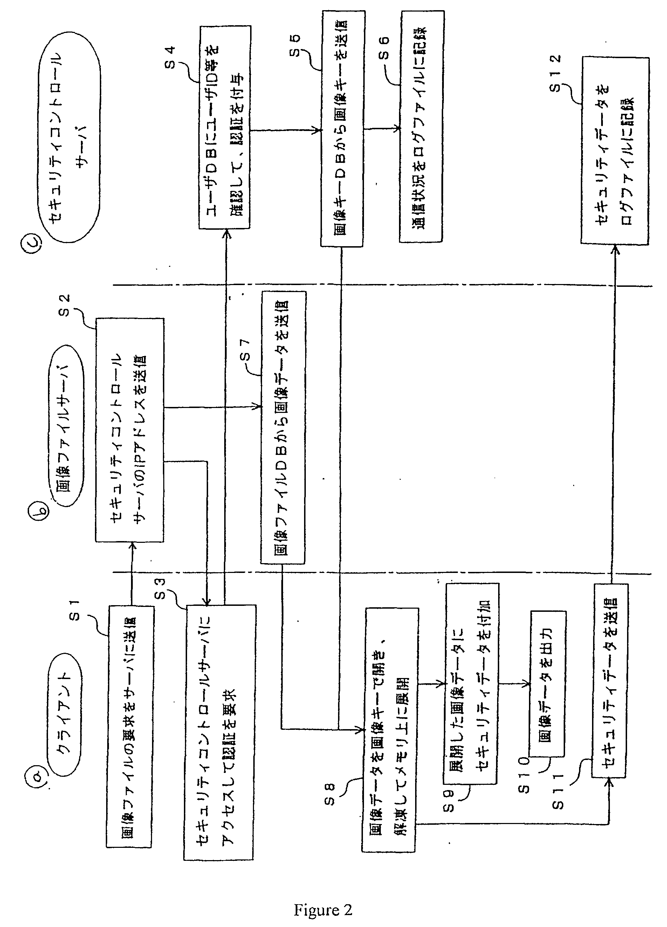

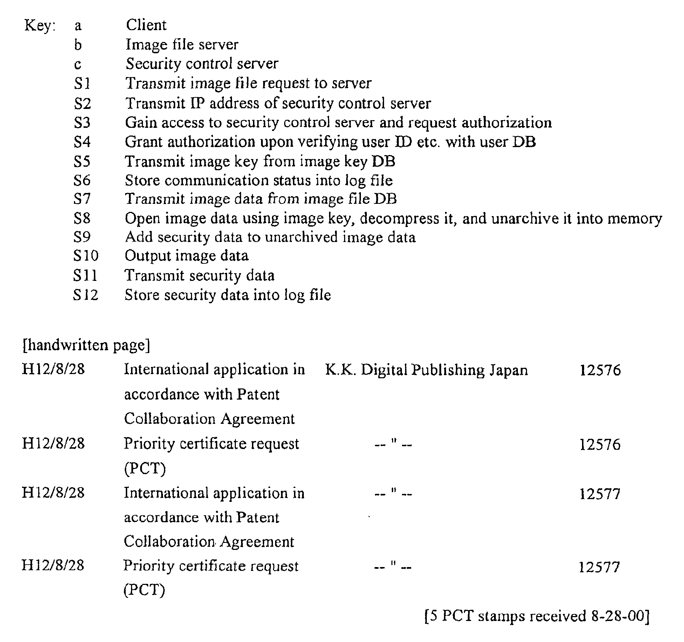

Next, a preferred application example of the image distribution method in accordance with the present invention will be explained using Figure 2. First, the client (2) activates a general-purpose or WWW-dedicated browser in order to get connected to the image file server (3) via the Internet, Once the client (2) transmits a request specifying the name and the quality of the desired image file (step S1), the image file server (3) returns an IP address for the security control server (4) (step S2). The client (2) gains access to the security control server (4) using said IP address in order to request for authorization to acquire the image data (step S3). User ID, client's IP address, and serial number of the hard disk drive as data peculiar to the client are utilized for said authorization.

The security control server (4) verifies registered data, such as user ID, in reference to the user database (7) before granting authorization (step S4). Then, an image key peculiar to the image data requested is obtained from the image key database (8) and transmitted to the client (2) (step S5), and the status of this communication is stored in the log file at the same time (9) (step S6). On the other hand, the image filer server (3) obtains the image data requested from the image file database (5) and transmits it to the client (2) (step S7). Similarly, the image file server (3) also stores the communication status with the client (2) in the log file (6).

The client (2) opens and decompresses the image data received from the image file server (3) using the image key received from the security control server (4) and unarchives it to memory as a pixel data map of the respective pixels constituting the image (step S8). Then, the security data is encoded and added to the unarchived image data (step S9). In general, the addition of security data is achieved using a so-called electronic watermark. In the present application example, an electronic watermark can be inserted by selecting several pixels placed at non-adjacent positions locations among the pixels for the aforementioned unarchived image data and increasing or decreasing the luminance levels of the aforementioned pixels. The positions of the aforementioned pixels can be selected in advance, and they can be also changed depending on the contents of the image.

The image data to which the security data has been added in said manner is output (step S10) and can be utilized in a variety of ways; for example, displayed directly on the client's display, stored in a storage device, such as a hard disk drive, or other storage media; or transmitted on-line to another apparatus. At the same time, the client (2) transmits the aforementioned security data to the security control server (4) (step S11), and the security control server (4) stores it in the log file (9) (step S12).

As a result, because a record on the distribution of the image data is kept in the security control server (4), in the event of subsequent illegal use of the image data, its redistribution route can be easily specified by cross-referencing the security data embedded in the image data. In addition, in the present application example, because the image file server (3) and the security control server (4) are provided separately, security data transmitted from clients can be managed once the address of the security control server (4) is preset on the network even when the image file server (3) is set to an arbitrary address as needed, that is, when the image file database (5) is set to an arbitrary address.

In another application example of the present invention, the image file server (3) and the security control server (4) can be integrated in order to use a single server for the configuration. In this case, access to the security control server (4) and use of the image key can be omitted. That is, the client (2) first requests authorization from the server for image distribution; and after the server has granted authorization in reference to the user database (7) in response to said request, the client (2) requests distribution of the desired image in order to have the image transmitted. Needless to say, in this case, too, after the client has opened the image data and unarchived it into the memory, security data is added to the image data in the same manner as that in the aforementioned application example and transmitted to the server, and the server stores it into the log file.

Moreover, in yet another application example, the IP address for the security control server (4) can be added to the image data distributed from the image file server (3) in advance. In this case, upon receiving an image data distribution request from the client (2), the image file server (3) transmits the image data requested. The client (2) reads the IP address from the image data received and gains access to the security control server (4) in order to request authorization. Once the security control server (4) completes authorization and transmits the image key, the client (2) is able to open the image data using said image key.

A preferred application example of the present invention was explained in detail above. As is clear to an expert in the field, the present invention can be implemented with various kinds of changes and modifications to the aforementioned application example without exceeding the scope of the invention. For example, the present invention can also be applied to a network other than the Internet in the same manner.

## Claims

1. An image data distribution method **characterized in that** it contains a step in which image data distributed from the server side is unarchived into a memory on the client side, and user security data is then added to the unarchived image data in order to prevent illegal use of image data resulting from the distribution of image data from the server side to the client side via a network.

2. The image data distribution method of Claim 1, characterized as further containing a process in which the aforementioned user security data is transmitted from the aforementioned client side to the aforementioned server side and a step in which the aforementioned security data is stored in a storage device on the aforementioned server side.

3. The image data distribution method of Claim 1 or 2, **characterized in that** the aforementioned security data is added to the aforementioned image data in the form of an electronic watermark.

4. The image data distribution method of one of Claims 1 through 3, **characterized in that** the aforementioned security data is added to the aforementioned image data by selecting several pixels in non-adjacent positions locations from the pixels of the aforementioned unarchived image data and by increasing or decreasing the luminance level of the aforementioned selected pixels.

5. An image data distribution method **characterized in that** it includes a step on the server side in which an instruction is given for the aforementioned client side to gain access to a security controller which authorizes distribution of image data in response to a request made by the client, and a step on the server side in which an electronic key for unarchiving the image data is transmitted from the aforementioned security controller to the aforementioned client side in response to the authorization request for image data distribution from the aforementioned client side in order to prevent illegal use of image data resulting from the distribution of image data from the server side to the client side via a network.

6. The image data distribution method of Claim 5, characterized as further containing a step for storing the client communication status.

7. The image data distribution method of Claims 5 or 6, **characterized in that** access to the aforementioned security controller is instructed through the provision of IP address for the aforementioned security controller.

8. A storage medium containing software for the execution of the image data distribution method of one of Claims 1 through 3 and 5 through 7.

9. An image data distribution method **characterized in that** it is a method for distributing image data from a server to a client comprising
a step in which an instruction for the aforementioned client side to gain access to a security controller is given from the server side in response to a request for an image data by the client side,
a step in which the aforementioned client side gains access to the aforementioned security controller in order to be authorized to receive image data,
a step in which image data corresponding to the aforementioned request is transmitted from the aforementioned server side to the aforementioned client side,
a step in which an image key for opening the aforementioned image date is transmitted from the aforementioned server side to the aforementioned client side,
a step in which the aforementioned image data is unarchived using the aforementioned image key on the aforementioned client side, and user security data is added to said image data, and a step in which the image data added with the aforementioned security data is output.

10. The image data distribution method of Claim 9, **characterized in that** it also contains a step in which the aforementioned security data is transmitted to the aforementioned server side and a step in which said security data is stored by the aforementioned server side.

11. The image data distribution method of Claim 9 or 10, **characterized in that** the aforementioned server side is further provided with a step in which communication status with the client side is stored in a log file.

12. The image data distribution method of one of Claims 9 through 11, **characterized in that** access to the aforementioned security controller is instructed through the provision of IP address for the aforementioned security controller.

13. The image data distribution method of one of Claims 9 through 12, **characterized in that** the aforementioned image data transmitted from the server side is compressed, so that the aforementioned security data is added after said image data is unarchived upon the request from the aforementioned client.

14. The image data distribution method of one of Claims 9 through 13, **characterized in that** the aforementioned security data is added to the aforementioned image data in the form of an electronic watermark.

15. The image data distribution method of one of Claims 9 through 14, **characterized in that** the aforementioned security data is added to the aforementioned image data by selecting several pixels placed at non-adjacent positions locations among the pixels for the aforementioned image data unarchived using the aforementioned image key and by increasing or decreasing the luminance level of the aforementioned pixels selected.

16. The image data distribution method of one of Claims 9 through 15 **characterized in that** the date and time of the distribution of the aforementioned image data, user ID, and the serial number of the aforementioned client's storage device storing the aforementioned image data or the IP address of the aforementioned client are included in the aforementioned security data.

17. An image data distribution system **characterized in that** it is equipped with an image file server having an image file database containing image files,
a security control server having a user database containing registration data on the respective users and an image key database containing image keys for unarchiving the aforementioned respective image files,
clients, and
a network for connecting the aforementioned image file server, the aforementioned security control server, and the aforementioned clients; wherein,
the aforementioned image file server has the function of instructing the client to gain access to the aforementioned security control server in response to a request from the aforementioned client for image data and a function of transmitting the image data requested to the aforementioned client,
the aforementioned client has a function of gaining access to the aforementioned security control server to request user authorization to obtain the aforementioned image data,
the aforementioned security control server has functions of verifying, via the aforementioned user database, the user authorization in response to the aforementioned client's request for authorization and of then transmitting the image key to the aforementioned requested image data from the requested image key database, and
the aforementioned client is further provided with functions for unarchiving the aforementioned image data received using the aforementioned image key and for adding the aforementioned user security data to the aforementioned image data.

18. The image data distribution system of Claim 17 **characterized in that** the aforementioned client has also a function of transmitting the aforementioned security data to the aforementioned security control server, and that the aforementioned security control server also has a function of storing the aforementioned security data.

19. The image data distribution system of Claim 17 or 18, **characterized in that** the aforementioned security control server has a log file to store communication statuses with the aforementioned clients.

20. The image data distribution system of one of Claims 17 through 19, **characterized in that** the aforementioned image file server gives an instruction to gain access to the aforementioned security control server through the provision of the IP address.

21. The image data distribution system of one of Claims 17 through 20, **characterized in that** the aforementioned image data transmitted from the aforementioned image file server is compressed, so that the aforementioned client unarchives the aforementioned received image data before adding the aforementioned security data.

22. The image data distribution system of one of Claims 17 through 21, **characterized in that** the aforementioned client has the function of adding the aforementioned security data to the aforementioned image data in the form of an electronic watermark.

23. The image data distribution system of one of Claims 17 through 22, **characterized in that** the aforementioned security data contains the date and time of the distribution of the aforementioned image data, user ID, and the serial number of the aforementioned client's storage device storing the aforementioned image data or the IP address of the aforementioned client.

24. Image data **characterized in that** user information is embedded by increasing or decreasing the luminance levels of several selected pixels at non-adjacent positions within a map made up of pixel data in the form of dots.
